# EUROPÄISCHE PATENTSCHRIFT

(11) **EP 3 427 880 B1**
(45) Veröffentlichungstag und Bekanntmachung des Hinweises auf die Patenterteilung: **26.02.2025**
(21) Anmeldenummer: 18181973.1
(22) Anmeldetag: 05.07.2018
(51) Int. Cl.: B23G 1/04, B23F 15/08, B23F 13/02, F04C 2/08, F04C 2/16

(54) **VERFAHREN ZUR HERSTELLUNG EINES ROTORS FÜR EINE SCHRAUBENSPINDELPUMPE; SPANENDE BEARBEITUNGSMASCHINE DAFÜR**
METHOD FOR MANUFACTURING OF A ROTOR FOR A SCREW PUMP; CHIP-REMOVAL MACHINE TOOL THEREFOR
MÉTHODE DE FABRICATION D'UN ROTOR POUR UNE POMPE À VIS; MACHINE D'USINAGE PAR ENLÈVEMENT DE COPEAUX À CET EFFET

(30) Priorität: 06.07.2017 DE 102017115089
(43) Veröffentlichungstag der Anmeldung: 16.01.2019
(73) Patentinhaber: Klaus Union GmbH & Co. KG, 44795 Bochum (DE)
(72) Erfinder: Eschner, Thomas, 44797 Bochum (DE)
(74) Vertreter: Schneiders & Behrendt Bochum

(56) Entgegenhaltungen:
- EP-A1- 1 402 982
- WO-A1-2011/096274
- FR-A- 1 545 739
- JP-A- H06 226 503
- US-A- 3 789 708

## Beschreibung

Die Erfindung betrifft ein Verfahren zur Herstellung eines Rotors für eine Schraubenspindelpumpe, gemäß dem Oberbegriff des Anspruchs 1. Außerdem betrifft die Erfindung eine spanende Bearbeitungsmaschine zur Herstellung eines Rotors für eine Schraubenspindelpumpe, gemäß dem Oberbegriff des Anspruchs 12.

Es ist bekannt, Rotoren für Schraubenspindelpumpen dadurch herzustellen, dass schraubenförmige Profilierungen durch Fräsen in ein Werkstück gefertigt werden. Hierbei stellt insbesondere die Endfertigung der schraubenförmigen Profilierung einen zeitaufwändigen Arbeitsschritt dar, da die endgültige Geometrie hier aufwendig in zahlreichen komplizierten Fräsvorgängen erreicht wird.

Aus EP 1 402 982 A1 ist ein zeitaufwendiges Verfahren bekannt, das eine Grobbearbeitung durch ein Fräswerkzeug und anschließendes Schlichten durch ein Plattenform-Schneidwerkzeug vorschlägt, um schraubenförmige Nuten in ein Bauteil einzubringen.

In WO 2011/096274 A1 ist ebenfalls ein zeitaufwendiges Verfahren zur Herstellung eines Rotors für eine Schraubenspindelpumpe beschrieben, bei dem das Werkstück um die Längsachse gedreht wird und ein Schneidwerkzeug gesteuert bewegt wird, um die Schraubenrotoren zu formen.

Der Erfindung stellt sich somit das Problem, ein Verfahren anzugeben, welches die beschriebenen Nachteile behebt und eine einfache und schnelle Herstellung eines Rotors für eine Schraubenspindelpumpe ermöglicht. Zudem soll eine Vorrichtung angegeben werden, die eine einfache und schnelle Herstellung eines Rotors für eine Schraubenspindelpumpe ermöglicht.

Erfindungsgemäß wird dieses Problem durch ein Verfahren mit den Merkmalen des Patentanspruchs 1 und eine spanende Bearbeitungsmachine gemäß Anspruch 12 gelöst.

Erfindungsgemäß erfolgt die Herstellung des Rotors durch Drehen. Dadurch ist eine einfache und zudem schnelle Herstellung der schraubenförmigen Profilierung des Rotors möglich. Dies wird insbesondere dadurch erreicht, dass das bereitgestellte, vorgefertigte, zumindest abschnittsweise zylindrische Werkstück um dessen Längsachse drehbar befestigt wird, z.B. in einer rechnergesteuerten spanenden Bearbeitungsmaschine üblicher Art, die für das Herstellungsverfahren mit einem geeigneten Schneidwerkzeug ausgerüstet wird. Das Drehen des Werkstücks um dessen Längsachse erfolgt dann in definierter Art und Weise unter Steuerung der Bewegung des Schneidwerkzeugs, wobei das Schneidwerkzeug in einem Schneidvorgang in einer Bearbeitungsrichtung parallel zur Längsachse des Werkstücks kontinuierlich bewegt wird. Die momentane Position des Schneidwerkzeugs in der Bearbeitungsrichtung ist dabei eine vorgegebene Funktion des momentanen Drehwinkels des Werkstücks um dessen Längsachse. Solche Schneidvorgänge werden zur Erzeugung der schraubenförmigen Profilierung mehrfach ausgeführt. Dadurch wird die endgültige Rotorgeometrie, insbesondere die der schraubenförmigen Profilierung, erzeugt.

Beispielsweise wird in jedem Schneidvorgang die momentane Position des Schneidwerkzeugs entlang der Längsachse proportional zum Drehwinkel gesteuert. Dadurch ergibt sich eine helixförmige Trajektorie des Schneidwerkzeugs relativ zum Werkstück. Bei jedem Schneidvorgang wird das Schneidwerkzeug also erfindungsgemäß mit einem konstanten radialen Abstand von der Längsachse, d.h. der Drehachse des Werkstücks bewegt. Von Schneidvorgang zu Schneidvorgang können dann zweckmäßig der Durchmesser und die Lage der helixförmigen Trajektorie (in Längsrichtung des Werkstücks) variiert werden, um die schraubenförmige Profilierung mit einer exakten Kontur der Schraubenflanken schrittweise herauszuarbeiten. Dabei ist von zentraler Bedeutung, dass der Drehwinkel bei der Drehbewegung des Werkstücks präzise gesteuert wird und über die einzelnen Schneidvorgänge hinweg definierte Werte annimmt. Nur so kann sichergestellt werden, dass die in den verschiedenen Schneidvorgängen durchlaufenen Helixtrajektorien jeweils eine definierte Lage zueinander haben. Hierin unterscheidet sich das erfindungsgemäße Verfahren insbesondere von herkömmlichen Drehverfahren, bei denen das Werkstück kontinuierlich (z.B. mit konstanter Geschwindigkeit) gedreht wird, während das Schneidwerkzeug in axialer und radialer Richtung zugestellt wird, um eine gewünschte Kontur zu erzeugen. Ein solches konventionelles Verfahren ermöglicht nicht die zuvor beschriebene erfindungsgemäß präzise Konturierung in mehreren sukzessiven Schneidvorgängen. Mit herkömmlichen Drehverfahren lässt sich entsprechend nicht die Präzision erzielen, die zur Herstellung der Schraubenflanken einer Schraubenspindelpumpe erforderlich ist.

Erfindungsgemäß kann insbesondere die Winkelposition der schraubenförmigen Profilierung auf der Rotorwelle präzise festgelegt werden. Hierdurch lassen sich mehrere schraubenförmige Profilierungen an einem monolithischen Werkstück vorsehen, deren Winkelpositionen aufeinander abgestimmt sind. Die genaue Vorgabe der Winkelpositionen der schraubenförmigen Profilierungen zueinander stellt sicher, dass zwei gegenläufige schraubenförmige Profilierungen an einem Werkstück mit höchster Präzision winkelrichtig relativ zueinander ausgerichtet sind. Dies ist eine wichtige Voraussetzung dafür, dass beispielsweise die Rotoren einer Doppelschraubenspindelpumpe kollisionsfrei ineinandergreifen, also miteinander kämmen können.

Der vom Schneidwerkzeug im Schneidvorgang durchgeführte Schnitt in das vorgefertigte Werkstück ermöglicht eine besonders einfache und schnelle Endfertigung der schraubenförmigen Profilierung des Rotors. Hierbei sorgt die Rotation des Werkstücks um die eigene Längsachse für die Schnittbewegung, während das Schneidwerkzeug eine mit der Rotationsbewegung wie zuvor beschrieben synchronisierten Vorschubbewegung vollzieht, so dass sich die endgültige Geometrie der schraubenförmigen Profilierung herausbildet.

Erfindungsgemäß wird vor der Bereitstellung des Schneidwerkzeugs ein drehbares Fräswerkzeug, vorzugsweise mit mindestens zwei Schneidezähnen, bereitgestellt, wobei eine Bewegungssteuerung des drehenden Fräswerkzeugs relativ zum Werkstück erfolgt, sodass ein Fräsvorgang durch das Fräswerkzeug ausgeführt wird, wodurch die schraubenförmig Profilierung durch das Fräsen in das Werkstück (zunächst grob) vorgefertigt wird. Durch diese Vorfertigung der schraubenförmigen Profilierung kann sehr schnell und effektiv Material vom Werkstück abgefräst werden, wobei im Anschluss zur präzisen Endfertigung der schraubenförmigen Profilierung durch Drehen erfindungsgemäß das Schneidwerkzeug verwendet wird.

Eine vorteilhafte Ausführung ist, dass vor der Bereitstellung des Schneidwerkzeugs oder vor der Bereitstellung des Fräswerkzeug ein Drehmeißel bereitgestellt wird, wobei eine Bewegungssteuerung des Drehmeißels relativ zum Werkstück erfolgt, sodass ein Drehschnittvorgang durch den Drehmeißel ausgeführt wird, wodurch zylinderförmige Abschnitte (einschließlich der Rotorwelle) durch das Abdrehen des Werkstücks vorgefertigt werden. Zwischen den zylinderförmigen Abschnitten wird vorzugsweise ein Freistich eingebracht, um später mit dem Schneidwerkzeug die zylinderförmigen Abschnitte besser erreichen und bearbeiten zu können. Durch die Vorfertigung der zylinderförmigen Abschnitte kann sehr schnell und effektiv Material vom Werkstück abgetragen werden, sodass die Zeit bis zur Endfertigung der schraubenförmigen Profilierung mit dem erfindungsgemäßen Schneidwerkzeug deutlich verkürzt werden kann.

Weiter vorteilhaft ist die Ausgestaltung, dass das Schneidwerkzeug am Ende eines Schneidvorganges in einem Positioniervorgang zunächst entgegen der Bearbeitungsrichtung entlang der Längsachse des Werkstücks an den schraubenförmigen Profilierungen vorbei zurück bewegt wird. Danach wird das Schneidwerkzeug an einer hinsichtlich des Drehwinkels des Werkstücks um die Längsachse, hinsichtlich des radialen Abstands von der Längsachse und hinsichtlich der Position in Bearbeitungsrichtung vorgegebenen Anfangsposition mit der schraubenförmigen Profilierung erneut in Eingriff gebracht. Von dieser Anfangsposition aus wird dann der nächste Schneidvorgang durchgeführt. Der Schneidvorgang und der Positioniervorgang werden zweckmäßig mehrfach wiederholt. Die Trajektorie des Schneidwerkzeugs, d.h. der funktionale Zusammenhang zwischen Drehwinkel des Werkstücks um dessen Längsachse und Position des Schneidwerkzeugs in der Bearbeitungsrichtung, ist dabei jeweils unverändert. Es ändert sich jedoch jeweils die Anfangsposition des Schneidwerkzeugs - wenigstens hinsichtlich des radialen Abstands von der Längsachse und hinsichtlich der Position in der Bearbeitungsrichtung - von Schneidvorgang zu Schneidvorgang, um auf diese Weise die vorgegebene Kontur der Flanken der schraubenförmigen Profilierung präzise zu erzeugen.

Eine bevorzugte Ausführung der erfindungsgemäße Verfahrens sieht vor, dass der Schneidvorgang und der Positioniervorgang wiederholt werden, bis die schraubenförmige Profilierung eine von der endgültigen Form des Rotors durch ein Übermaß abweichende Form erreicht hat, wobei das Werkstück in der Übermaß aufweisenden Form gehärtet wird und anschließend das Übermaß in weiteren sich wiederholenden Schneid- und Positioniervorgängen weggeschnitten wird, bis die schraubenförmige Profilierung die endgültige Form des Rotors erreicht hat. Die Herstellung, insbesondere der schraubenförmigen Profilierung, des Rotors aus dem Werkstück lässt sich besonders einfach vornehmen, wenn das Werkstück aus noch ungehärtetem Material besteht. Somit lässt sich sehr einfach eine von der endgültigen Form des Rotors durch ein Übermaß abweichende Form erreichen. Beim Härten kann sich das Werkstück um ein gewisses Ausmaß verziehen, was durch das Übermaß Berücksichtigung findet. Das Übermaß sollte so gewählt werden, dass nach dem Härten des Werkstückes das Übermaß in weiteren Schneid- und Positioniervorgängen bis zur endgültigen Form des Werkstückes entfernt werden kann. Hierbei ist es von Vorteil, das Übermaß minimal auszugestalten, da die Schneidvorgänge in das gehärtete Material zu einer hohen Belastung und einem hohen Verschleiß des Schneidwerkzeugs führen und daher auf das Nötigste reduziert werden sollten.

Erfindungsgemäß weist der im Schneidvorgang durch das Schneidwerkzeug vorgenommene Schnitt eine Schnittrichtung auf, die senkrecht zur Bearbeitungsrichtung verläuft. Mit einer solchen Ausgestaltung ist eine einfache Kinematik gegeben, mit der sich die schraubenförmige Profilierung besonders einfach herstellen lässt.

Weiter vorteilhaft ist die Ausgestaltung, dass das Schneidwerkzeug im Schneidvorgang in eine vorgefertigte Profilierung eintaucht. Das Eintauchen des Schneidwerkzeugs in eine (z.B. durch Fräsen grob) vorgefertigte Profilierung ermöglicht die effiziente Fertigung der Endgeometrie der schraubenförmigen Profilierung insbesondere im Bereich der Flanken der Profilierung. Die Gewindegänge der Schraubenspindeln, d.h. die Förderkammern der entsprechenden Schraubenspindelpumpe, werden demnach nicht vollständig durch Drehen gefertigt. Das erfindungsgemäße Drehen wird nur zum Herausarbeiten der präzisen Flankenkontur verwendet.

Durch das erfindungsgemäße Verfahren kann das Werkstück, d.h. der Rotor, mit wenigstens einem Abschnitt mit schraubenförmiger Profilierung (Schraubenpaket) und mit im Wesentlichen zylindrischen Wellenabschnitten ausgebildet werden. Die zylindrischen Wellenabschnitte dienen der Lagerung des Rotors im Gehäuse einer Schraubenspindelpumpe und zur Verbindung mit einem Antrieb, wie bei aus dem Stand der Technik bekannten Schraubenspindelpumpen üblich. Vorteilhaft kann der Rotor mit wenigstens zwei Abschnitten mit schraubenförmiger Profilierung ausgebildet werden, wobei die schraubenförmigen Profilierungen gegenläufig sind. Dies entspricht der Ausgestaltung bei Doppelschraubenspindelpumpen, bei denen die Schrauben zweier Rotoren miteinander kämmen und so Förderkammern zwischen sich ausbilden, die ein Fluid aus zwei außenliegenden Saugkammern in eine innenliegende Druckkammer fördern. Besonders vorteilhaft ist, dass die Abschnitte mit schraubenförmiger Profilierung, d.h. die Schraubenpakete, durch das erfindungsgemäße Verfahren mit den Wellenabschnitten einstückig, d.h. monolithisch ausgebildet werden können.

Ferner ist Gegenstand der Erfindung eine spanende Bearbeitungsmaschine zur Herstellung eines Rotors für eine Schraubenspindelpumpe, mit einer rechnergestützten numerischen Steuerung. Dabei kann es sich z.B. um einen handelsüblichen 5-Achs-Automaten handeln. Erfindungsgemäß ist die Bearbeitungsmaschine durch Programmierung der rechnergestützten numerischen Steuerung mit Steuerdaten zur Durchführung des zuvor beschriebenen Verfahren eingerichtet. Dabei bestimmen die Steuerdaten die Drehbewegung des Werkstücks um die Längsachse nach Maßgabe von Drehwinkeln, sowie die Bewegung des Schneidwerkzeug in der Bearbeitungsrichtung parallel zur Längsachse des Werkstücks, und zwar in der Weise, dass die Steuerdaten für eine Abfolge von Schneidvorgängen Zuordnungen von momentanen Positionen des Schneidwerkzeugs in der Bearbeitungsrichtung zu Drehwinkeln des Werkstücks um die Längsachse umfassen. Das bedeutet nichts anderes, als dass, mit anderen Worten, die Drehachse bei dem Drehvorgang eine von der rechnergestützen numerischen Steuerung gesteuerte Achse der Bearbeitungsmaschine ist, so dass die Trajektorie des Schneidwerkzeugs während des Drehvorgangs in Relation zur Umfangsrichtung des Werkstücks definiert ist. Entsprechend wird durch Drehen der Rotor mit schraubenförmiger Profilierung als nicht rotationssymmetrisches Werkstück mit höchster Präzsion hergestellt. Dabei umfassen die Steuerdaten weiter zweckmäßig Anfangspositionsdaten, die für die Abfolge von Schneidvorgängen jeweils den anfänglichen Drehwinkel des Werkstücks um die Längsachse, den radialen Abstand des Schneidwerkzeugs von der Längsachse und die anfängliche Position des Schneidwerkzeugs in Bearbeitungsrichtung definieren. Auf Basis dieser Steuerdaten kann die schraubenförmige Profilierung in mehreren Schneidvorgängen herausgearbeitet werden, wobei die immer gleiche Drehbewegung um die Längsachse des Werkstücks und die damit synchrone Bewegung des Schneidwerkzeugs ausgeführt werden, wobei lediglich von Schneidvorgang zu Schneidvorgang der Abstand von der Drehachse, d.h. der Radius der erzeugten Helix, und die Lage der Helix in Bearbeitungsrichtung variiert werden, um die gewünschte Flankenkonturierung der Schraubenprofilierung zu erhalten.

Weitere Merkmale, Einzelheiten und Vorteile der Erfindung ergeben sich aufgrund der nachfolgenden Beschreibung sowie anhand der Zeichnungen. Ausführungsbeispiele der Erfindung sind in den folgenden Zeichnungen rein schematisch dargestellt und werden nachfolgend näher beschrieben. Einander entsprechende Gegenstände oder Elemente sind in allen Figuren mit den gleichen Bezugszeichen versehen. Es zeigen:
- **Figur 1**: **schematische Darstellung eines Werkstücks für einen Rotor;**
- **Figur 2**: **schematische Detailansicht eines Werkstücks für einen Rotor.**

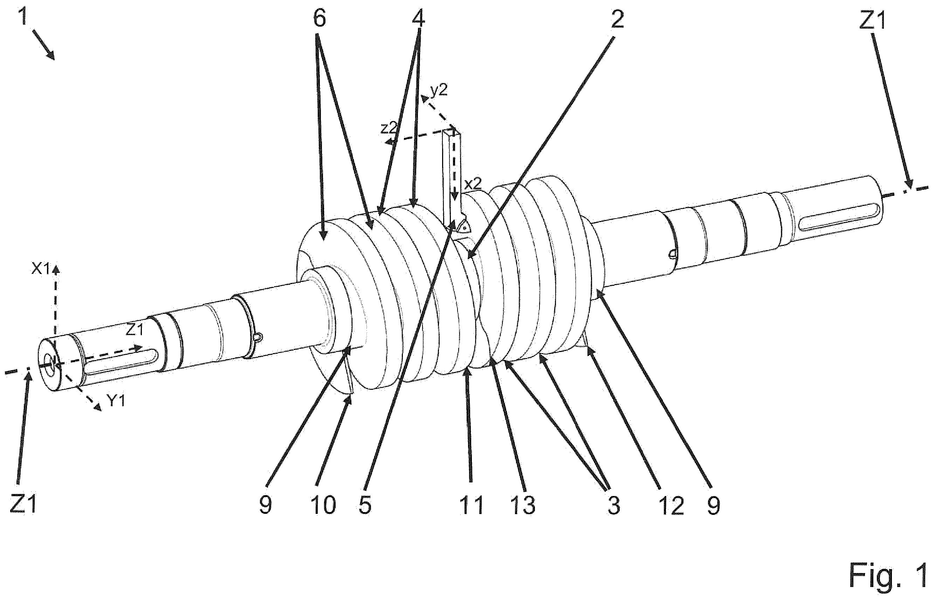

In Figur 1 mit dem Bezugszeichen 1 bezeichnet ist ein Werkstück 1 für einen erfindungsgemäß hergestellten Rotor einer Schraubenspindelpumpe schematisch dargestellt. Die Darstellung gemäß Figur 1 zeigt ein Werkstück 1, aus dem ein Rotor für eine Schraubenspindelpumpe hergestellt wird. Die Herstellung des Rotors ist bereits weit fortgeschritten, sodass zwei schraubenförmige Profilierungen von Anfang 10 bis Ende 11 und von Anfang 12 bis Ende 13 zu erkennen sind, die aus zwei zylinderförmigen Abschnitten herausgeschnitten sind. Diese zylinderförmigen Abschnitte weisen einen größeren Durchmesser als die Welle 14 des Rotors oder die Nabe 9 auf. Zwischen den zylinderförmigen Abschnitten befindet sich ein Freistich 2.

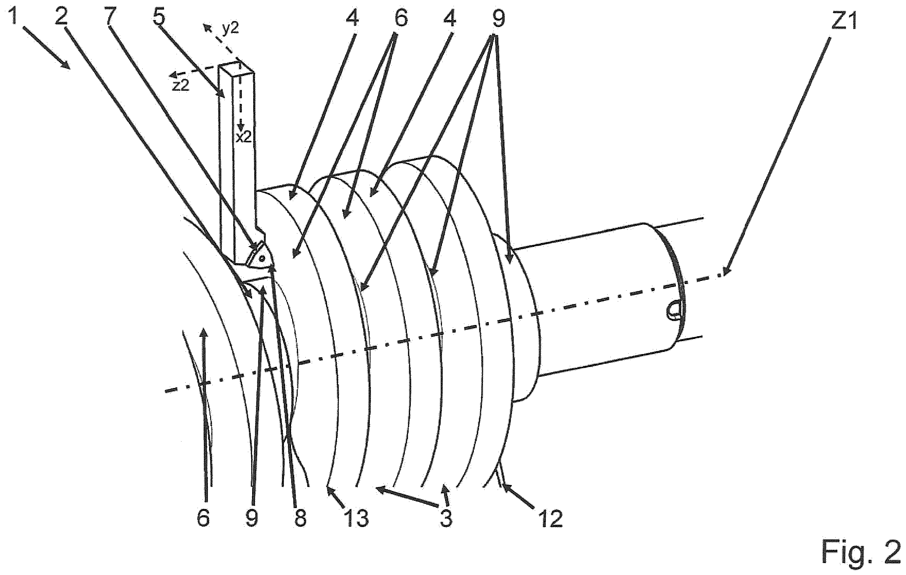

Das in Figur 1 und 2 dargestellte Schneidwerkzeug 5 ist mit der Flanke 6 der schraubenförmigen Profilierung 12, 13 in Eingriff und bearbeitet diese zur Herstellung der endgültigen Geometrie. Für den hier dargestellten Schneidvorgang wird das Werkstück 1 um dessen Längsachse Z1 gedreht, wobei die Bewegung des Schneidwerkzeugs 5 parallel zur Längsachse Z1 mit der Drehbewegung des Werkstücks 1 um die Längsachse Z1 synchronisiert erfolgt, wie oben beschrieben. Hierdurch kann das dargestellte Schneidwerkzeug 5 durch Schnitte in das Werkstück 1 die schraubenförmige Profilierung 12, 13, insbesondere die komplexe Geometrie der Schraubenflanken präzise und schnell herstellen. Dadurch dass die momentane Position des Schneidwerkzeugs 5 in der Bearbeitungsrichtung z2 eine vorgegebene Funktion des momentanen Drehwinkels des Werkstücks 1 um die Längsachse Z1 ist, kann unter anderem die Winkelposition der schraubenförmigen Profilierung 12, 13 auf der Welle 14 festgelegt werden. Somit können die zwei gegenläufigen schraubenförmigen Profilierungen 10, 11, 12, 13 winkelrichtig zueinander ausgerichtet werden, und diese können mit einem weiteren Rotor einer Doppelschraubenspindelpumpe kollisionsfrei kämmen. Bei dem Schneidvorgang bewegt sich das Schneidwerkzeug 5 spanabhebend in der eingezeichneten Bearbeitungsrichtung z2 entlang der Längsachse Z1 des Werkstücks. Während eines Schneidvorgangs wird der radiale Abstand des Schneidwerkzeugs 5 zur Längsachse Z1 des Werkstücks 1 konstant gehalten, sodass keine Zustellung in der eingezeichneten Bearbeitungsrichtung x2 erfolgt. Auch wird die Position des Schneidwerkzeugs 5 in Bearbeitungsrichtung y2 während eines Schneidvorgangs nicht verändert. In der in Figur 1 dargestellten Position befindet sich das Schneidwerkzeug 5 fast am Ende eines Schneidvorganges, nachdem es am Anfang 12 der Profilierung in Eingriff mit der schraubenförmigen Profilierung gekommen war, ist es in dem Schneidvorgang parallel zur Längsachse Z1 des Werkstückes 1 in Bearbeitungsrichtung z2 verschoben worden. Am Ende 13 der Profilierung endet der hier dargestellte Schneidvorgang und das Schneidwerkzeug 5 wird in einem Positioniervorgang von der Längsachse Z1 des Werkstücks 1 aus entgegen der Bearbeitungsrichtung x2 zurückgefahren. Hierdurch kann das Werkzeug entgegen der Bearbeitungsrichtung z2 entlang der Längsachse Z1 des Werkstücks 1 an der bereits zu erkennenden schraubenförmigen Profilierung 12, 13 vorbei bewegt werden. Am Anfang 12 der schraubenförmigen Profilierung angekommen wird das Schneidwerkzeug 5 in dem Positioniervorgang in Bearbeitungsrichtung x2 zur Längsachse Z1 des Werkstücks 1 verfahren bis das Schneidwerkzeug 5 an einer vorgegebenen Anfangsposition für einen neuen Schneidvorgang wieder mit der schraubenförmigen Profilierung 12 in Eingriff kommt, um einen neuen Schneidvorgang von Beginn an durchzuführen. Die für jeden Schneidvorgang individuell vorgegebene Anfangsposition wird abhängig von der gewünschten Kontur der schraubenförmigen Profilierung 12, 13 für die einzelnen Schneidvorgänge geplant und durch Zustellungen in Bearbeitungsrichtung x2 und in Bearbeitungsrichtung z2 erreicht. Außerdem wird in der Anfangsposition die Winkelposition, d.h. der Drehwinkel des Werkstücks 1 eingestellt, so dass die gewünschte Kontur in einer Anzahl von Schneidvorgängen präzise erzeugt wird. Dies beinhaltet, dass die kontinuierliche Drehbewegung des Werkstücks 1 nach jedem Schneidvorgang unterbrochen und das Werkstück 1 im Positioniervorgang in oder entgegen der zuvor während des Schneidvorgangs verwendeten Drehrichtung hinsichtlich des Drehwinkels auf die jeweilige neue Anfangsposition eingestellt wird, bevor das Werkstück 1 während des nächsten Schneidvorgangs wiederum um seine Längsachse rotiert wird. In Bearbeitungsrichtung y2 erfolgt in der Regel keine Zustellung und das Werkzeug 5 bewegt sich in einer Ebene, durch welche auch die Längsachse Z1 des Werkstücks 1 geht. Der im Schneidvorgang durch das Schneidwerkzeug 5 vorgenommene Schnitt weist eine Schnittrichtung entgegen der eingezeichneten Bearbeitungsrichtung y2 auf, die senkrecht zur eingezeichneten Bearbeitungsrichtung z2 verläuft. Wie in Figur 1 zu sehen ist, taucht das Schneidwerkzeug 5 im Schneidvorgang in die (z.B. durch Fräsen) grob vorgefertigte Profilierung 12, 13 ein.

Von besonderem Vorteil ist es, die Kontur der schraubenförmigen Profilierung 12, 13 zunächst mit einem Übermaß zu fertigen. Der Rotor mit der Übermaß aufweisenden Kontur wird dann gehärtet, und erst im Anschluss wird die endgültige Kontur der schraubenförmigen Profilierung 12, 13 gefertigt durch Entfernung des Übermaßes. Hierbei ist es sinnvoll, das Übermaß möglichst gering zu halten, da Schneidvorgänge in das gehärtete Material der schraubenförmigen Profilierung 12, 13 zu einer hohen Belastung und einem hohen Verschleiß am Schneidwerkzeug 5 führen.

In Figur 1 ist auf der linken Hälfte des Werkstückes 1 zudem eine gegenläufige schraubenförmige Profilierung von Anfang 10 bis Ende 11 in der endgültigen Geometrie gezeigt. Die schraubenförmige Profilierung 10, 11 ist hier ebenfalls durch Schnitte des Schneidwerkzeugs 5 hergestellt, wobei die einzelnen Schneidvorgänge vom Anfang 10 der schraubenförmigen Profilierung A hin zum Ende 11 der schraubenförmigen Profilierung 11 durchgeführt wurden. Der Freistich 2 zwischen den schraubenförmigen Profilierungen erleichtert den Blick auf das Schneidwerkzeug 5 sowie die Bearbeitung der Profilierungen durch das Schneidwerkzeug 5. Die erfindungsgemäße Synchronisierung der Drehbewegung des Werkstückes 1 mit der Bewegung des Schneidwerkzeugs 5 in Richtung z2, und zwar über die aufeinanderfolgenden verschiedenen Schneidvorgänge hinweg, stellt die genaue Einstellung der Winkelposition des Verlaufs der schraubenförmigen Profilierung 10, 11 sicher, so dass diese winkelrichtig zur gegenläufigen schraubenförmigen Profilierung 12, 13 an demselben Werkstück 1 ausgebildet ist.

Die Figur 2 zeigt schematisch dargestellt eine Detailansicht der in Figur 1 dargestellten Bearbeitungssituation. Hier ist deutlicher zu erkennen, dass das Schneidwerkzeug 5 eine Schneide 7 aufweist, bei der es sich vorzugsweise um eine Keramikschneide handelt. Diese Schneide 7 weist einen Schneidezahn 8 auf der mit der Flanke 6 der am Ende 13 der Profilierung B in Eingriff kommt. Dadurch dass lediglich ein relativ kleiner Schneidezahn 8 bei einem einzelnen Schneidvorgang in Eingriff kommt, kann durch Wiederholung von Schneid- und Positioniervorgängen eine besonders präzise Kontur der schraubenförmigen Profilierung erreicht werden. Auch gut zu erkennen ist, dass die schraubenförmige Profilierung aus Gewindenuten 3 und Gewindestegen 4 gebildet ist. Die Gewindestege 4 haben den Durchmesser der zylinderförmigen Abschnitte, aus denen sie herausgebildet sind. Die Gewindenuten 3 weisen einen geringeren Durchmesser auf, der bis zum Innendurchmesser der Nabe 9 reicht.

### Bezugszeichenliste

1 Werkstück
2 Freistich
3 Gewindenut (schraubenförmige Profilierung)
4 Gewindesteg (schraubenförmige Profilierung)
5 Schneidwerkzeug
6 Flanken (schraubenförmige Profilierung)
7 Schneide
8 Schneidezahn
9 Innendurchmesser (Nabe)
10 Anfang von Profilierung A
11 Ende von Profilierung A
12 Anfang von Profilierung B
13 Ende von Profilierung B
14 Welle
Z1 Längsachse (Werkstück)
x2 Bearbeitungsrichtung, Zustellrichtung (Werkzeug)
y2 Bearbeitungsrichtung entgegen der Schnittrichtung (Werkzeug)
z2 Bearbeitungsrichtung (Werkzeug)

## Patentansprüche

1. Verfahren zur Herstellung eines Rotors für eine Schraubenspindelpumpe, mit folgenden Schritten:
a) Bereitstellen eines vorgefertigten, zumindest abschnittsweise zylindrischen Werkstücks (1) mit einer Längsachse (Z1) und drehbares Befestigen des Werkstücks (1) um diese Längsachse (Z1),
b) Bereitstellen eines drehbaren Fräswerkzeugs,
c) Bewegungssteuerung des drehenden Fräswerkzeugs relativ zum Werkstück (1),
d) Ausführung von Fräsvorgängen durch das Fräswerkzeug und Vorfertigung der schraubenförmigen Profilierung (3, 4) durch Fräsen in das Werkstück,
e) Bereitstellen eines Schneidwerkzeugs (5),
**gekennzeichnet durch**
folgende Schritte:
f) Drehen des Werkstücks (1) um die Längsachse (Z1) und Bewegungssteuerung des Schneidwerkzeugs (5), wobei das Schneidwerkzeug (5) in einer Bearbeitungsrichtung (z2) parallel zur Längsachse (Z1) des Werkstücks (1) bewegt wird, wobei die momentane Position des Schneidwerkzeugs (5) in der Bearbeitungsrichtung (z2) eine vorgegebene Funktion des momentanen Drehwinkels des Werkstücks (1) um die Längsachse (Z1) ist, wobei der im Schneidvorgang durch das Schneidwerkzeug (5) vorgenommene Schnitt eine Schnittrichtung aufweist, die senkrecht zur Bearbeitungsrichtung (z2) verläuft,
g) mehrfache Ausführung von Schneidvorgängen gemäß Schritt f) zur Erzeugung einer schraubenförmigen Profilierung (3, 4) durch Schneiden in das vorgefertigte Werkstück (1), wobei das Schneidwerkzeug (5) bei jedem Schneidvorgang mit einem konstanten radialen Abstand zur Längsachse (Z1) des Werkstücks (1) bewegt wird, wobei das Schneidwerkzeug (5) in einem Schneidvorgang in der Bearbeitungsrichtung (z2) parallel zur Längsachse (Z1) des Werkstücks (1) kontinuierlich bewegt wird.

2. Verfahren nach Anspruch 1, **dadurch gekennzeichnet, dass** die momentane Position des Schneidwerkzeugs (5) entlang der Längsachse (Z1) proportional zum Drehwinkel gesteuert wird.

3. Verfahren nach Anspruch 1 oder 2, **dadurch gekennzeichnet, dass** folgende Schritte vor der Bereitstellung des Schneidwerkzeugs (Verfahrensschritt e) oder vor der Bereitstellung des Fräswerkzeugs (Verfahrensschritt b) durchgeführt werden:
h) Bereitstellen eines Drehmeißel,
i) Bewegungssteuerung des Drehmeißels relativ zum Werkstück (1),
j) Ausführung von Drehschnittvorgang durch den Drehmeißel und Vorfertigung von zylinderförmigen Abschnitten durch Abdrehen des Werkstücks (1).

4. Verfahren nach einem der vorhergehenden Ansprüche, **dadurch gekennzeichnet, dass** das Schneidwerkzeug (5) am Ende eines Schneidvorganges in einem Positioniervorgang entgegen der Bearbeitungsrichtung (z2) entlang der Längsachse (Z1) des Werkstücks (1) an den schraubenförmigen Profilierungen (3, 4) vorbei zurück bewegt wird.

5. Verfahren nach Anspruch 4, **dadurch gekennzeichnet, dass** das Schneidwerkzeug (5) in dem Positioniervorgang an einer hinsichtlich des Drehwinkels des Werkstücks um die Längsachse (Z1), hinsichtlich des radialen Abstands von der Längsachse (Z1) und hinsichtlich der Position in Bearbeitungsrichtung (z2) vorgegebenen Anfangsposition mit der schraubenförmigen Profilierung (3, 4) in Eingriff gebracht wird, um einen nächsten Schneidvorgang durchzuführen.

6. Verfahren nach Anspruch 5, **dadurch gekennzeichnet, dass** der Schneidvorgang und der Positioniervorgang wiederholt werden, wobei die Anfangsposition des Schneidwerkzeugs (5) wenigstens hinsichtlich des radialen Abstands von der Längsachse (Z1) und hinsichtlich der Position in der Bearbeitungsrichtung (z2) von Wiederholung zu Wiederholung variiert wird, um auf diese Weise eine vorgegebene Kontur der Flanken der schraubenförmigen Profilierung (3, 4) zu erzeugen.

7. Verfahren nach einem der Ansprüche 4 bis 6, **dadurch gekennzeichnet, dass** der Schneidvorgang und der Positioniervorgang wiederholt werden, bis die schraubenförmige Profilierung (3, 4) eine von der endgültigen Form des Werkstücks (1) durch ein Übermaß abweichende Form erreicht hat, wobei das Werkstück (1) in der Übermaß aufweisenden Form gehärtet wird und anschließend das Übermaß in weiteren wiederholten Schneid- und Positioniervorgängen weggeschnitten wird, bis die schraubenförmige Profilierung (3, 4) die endgültige Form des Werkstücks (1) erreicht hat.

8. Verfahren nach einem der Ansprüche 1 bis 7, **dadurch gekennzeichnet, dass** das Schneidwerkzeug (5) im Schneidvorgang in eine vorgefertigte Profilierung (3, 4) eintaucht.

9. Verfahren nach einem der Ansprüche 1 bis 8, **dadurch gekennzeichnet, dass** das Werkstück (1) mit wenigstens einem Abschnitt mit schraubenförmiger Profilierung (3, 4) und mit im Wesentlichen zylindrischen Wellenabschnitten ausgebildet wird.

10. Verfahren nach Anspruch 9, **dadurch gekennzeichnet, dass** das Werkstück (1) mit wenigstens zwei Abschnitten mit schraubenförmiger Profilierung (3, 4) ausgebildet wird, wobei die schraubenförmigen Profilierungen gegenläufig sind.

11. Verfahren nach Anspruch 9 oder 10, **dadurch gekennzeichnet, dass** die Abschnitte mit schraubenförmiger Profilierung (3, 4) und die Wellenabschnitte miteinander einstückig ausgebildet werden.

12. Spanende Bearbeitungsmaschine zur Herstellung eines Rotors für eine Schraubenspindelpumpe, mit einer rechnergestützten numerischen Steuerung, **dadurch gekennzeichnet, dass** die Bearbeitungsmaschine durch Programmierung der rechnergestützten numerischen Steuerung mit Steuerdaten so zur Durchführung des Verfahrens nach einem der Ansprüche 1 bis 11 eingerichtet ist, dass die Steuerdaten die Drehbewegung des Werkstücks (1) um die Längsachse (Z1) nach Maßgabe von Drehwinkeln bestimmen, sowie die Bewegung des Schneidwerkzeug (5) in der Bearbeitungsrichtung (z2) parallel zur Längsachse (Z1) des Werkstücks (1), in der Weise, dass die Steuerdaten für eine Abfolge von Schneidvorgängen Zuordnungen von momentanen Positionen des Schneidwerkzeugs (5) in der Bearbeitungsrichtung (z2) zu Drehwinkeln des Werkstücks (1) um die Längsachse (Z1) umfassen, wobei das Schneidwerkzeug (5) bei jedem Schneidvorgang mit einem konstanten radialen Abstand zur Längsachse (Z1) des Werkstücks (1) bewegt wird, wobei das Schneidwerkzeug (5) in einem Schneidvorgang in der Bearbeitungsrichtung (z2) parallel zur Längsachse (Z1) des Werkstücks (1) kontinuierlich bewegt wird.

13. Bearbeitungsmaschine nach Anspruch 12, **dadurch gekennzeichnet, dass** die Steuerdaten weiter Anfangspositionsdaten umfassen, die für die Abfolge von Schneidvorgängen jeweils den anfänglichen Drehwinkel des Werkstücks um die Längsachse (Z1), den radialen Abstand des Schneidwerkzeugs (5) von der Längsachse (Z1) und die anfängliche Position des Schneidwerkzeugs (5) in Bearbeitungsrichtung (z2) definieren.

## Claims

1. Method for manufacturing a rotor for a screw spindle pump with following steps:
a) Provision of a prefabricated, at least in sections cylindrical workpiece (1) with a longitudinal axis (Z1) and rotatable fastening of the workpiece (1) about this longitudinal axis (Z1),
b) Provision of a rotatable milling tool,
c) Motion control of the rotating milling tool relative to the workpiece (1),
d) Execution of milling operations by the milling tool and prefabrication of the helical profiling (3, 4) by milling into the workpiece,
e) Providing a cutting tool (5),
**characterized by**
following steps:
f) Rotation of the workpiece (1) about the longitudinal axis (Z1) and movement control of the cutting tool (5), wherein the cutting tool (5) is moved in a machining direction (z2) parallel to the longitudinal axis (Z1) of the workpiece (1), wherein the instantaneous position of the cutting tool (5) in the machining direction (z2) is a predetermined function of the instantaneous angle of rotation of the workpiece (1) about the longitudinal axis (Z1), wherein the cut made by the cutting tool (5) during the cutting process has a cutting direction which is perpendicular to the machining direction (z2),
g) multiple execution of cutting operations according to step f) for producing a helical profiling (3, 4) by cutting into the prefabricated workpiece (1), wherein the cutting tool (5) is moved at a constant radial distance from the longitudinal axis (Z1) of the workpiece (1) in each cutting operation, wherein the cutting tool (5) is moved continuously in a cutting operation in the machining direction (z2) parallel to the longitudinal axis (Z1) of the workpiece (1).

2. Method according to claim 1, **characterized in that** the instantaneous position of the cutting tool (5) along the longitudinal axis (Z1) is controlled proportionally to the angle of rotation.

3. Method according to claim 1 or 2, **characterized in that** following steps are carried out before the cutting tool is provided (method step e) ) or before the milling tool is provided (method step b) ):
h) Provide a lathe tool,
i) Movement control of the lathe tool relative to the workpiece (1),
j) Performing of turning cut operation by the lathe tool and prefabrication of cylindrical sections by turning off the workpiece (1).

4. Method according to any one of the preceding claims, **characterized in that** the cutting tool (5) is moved back past the helical profiles (3, 4) at the end of a cutting operation in a positioning operation counter to the machining direction (z2) along the longitudinal axis (Z1) of the workpiece (1).

5. Method according to claim 4, **characterized in that** the cutting tool (5) is brought into engagement with the helical profiling (3, 4) in the positioning process at an initial position predetermined with respect to the angle of rotation of the workpiece about the longitudinal axis (Z1), with respect to the radial distance from the longitudinal axis (Z1) and with respect to the position in the machining direction (z2), in order to carry out a next cutting process.

6. Method according to claim 5, **characterized in that** the cutting operation and the positioning operation are repeated, wherein the initial position of the cutting tool (5) is varied from repetition to repetition at least with regard to the radial distance from the longitudinal axis (Z1) and with regard to the position in the machining direction (z2), in order in this way to produce a predetermined contour of the flanks of the helical profiling (3, 4).

7. Method according to any one of claims 4 to 6, **characterized in that** the cutting operation and the positioning operation are repeated until the helical profiling (3, 4) has reached a shape deviating from the final shape of the workpiece (1) by an oversize, wherein the workpiece (1) is hardened in the shape having the oversize and the oversize subsequently being cut away in further repeated cutting and positioning operations until the helical profiling (3, 4) has reached the final shape of the workpiece (1).

8. Method according to any one of claims 1 to 7, **characterized in that** the cutting tool (5) dips into a prefabricated profiling (3, 4) during the cutting process.

9. Method according to any one of claims 1 to 8, **characterized in that** the workpiece (1) is formed with at least one section with helical profiling (3, 4) and with substantially cylindrical shaft sections.

10. Method according to claim 9, **characterized in that** the workpiece (1) is formed with at least two sections with helical profiling (3, 4), wherein the helical profilings are in opposite directions.

11. Method according to claim 9 or 10, **characterized in that** the sections with helical profiling (3, 4) and the shaft sections are formed in one piece with each other.

12. Cutting processing machine for manufacturing a rotor for a screw spindle pump, having a computer-aided numerical control, **characterized in that** the machine tool is set up by programming the computer-aided numerical control with control data for carrying out the method according to any one of claims 1 to 11 in such a way that the control data determine the rotary movement of the workpiece (1) about the longitudinal axis (Z1) in accordance with angles of rotation, and the movement of the cutting tool (5) in the machining direction (z2) parallel to the longitudinal axis (Z1) of the workpiece (1), in such a way that the control data for a sequence of cutting operations comprise assignments of instantaneous positions of the cutting tool (5) in the machining direction (z2) to angles of rotation of the workpiece (1) about the longitudinal axis (Z1), wherein the cutting tool (5) is moved at a constant radial distance from the longitudinal axis (Z1) of the workpiece (1) during each cutting operation, wherein the cutting tool (5) is moved continuously in a cutting operation in the machining direction (z2) parallel to the longitudinal axis (Z1) of the workpiece (1).

13. Processing machine according to claim 12, **characterized in that** the control data further comprise initial position data which, for the sequence of cutting operations, in each case define the initial angle of rotation of the workpiece about the longitudinal axis (Z1), the radial distance of the cutting tool (5) from the longitudinal axis (Z1) and the initial position of the cutting tool (5) in the processing direction (z2).

## Revendications

1. Procédé de fabrication d'un rotor pour une pompe à vis hélicoïdal, avec les étapes suivantes :
a) Mise à disposition une pièce à fabriquer (1) préfabriquée, au moins partiellement cylindrique, avec un axe longitudinal (Z1) et fixation rotative de la pièce à fabriquer (1) autour de cet axe longitudinal (Z1),
b) Mise à disposition un outil de fraisage rotatif,
c) Contrôle du mouvement de l'outil de fraisage rotatif par rapport à la pièce à fabriquer (1),
d) Exécution d'opérations de fraisage par l'outil de fraisage et préfabrication du profilage hélicoïdal (3, 4) par fraisage dans la pièce à fabriquer,
e) Mis à disposition un outil de coupe (5),
**caractérisé par**
les étapes suivantes :
f) Rotation de la pièce à fabriquer (1) autour de l'axe longitudinal (Z1) et commande du mouvement de l'outil de coupe (5), dans lequel l'outil de coupe (5) étant déplacé dans une direction d'usinage (z2) parallèle à l'axe longitudinal (Z1) de la pièce à fabriquer (1), dans lequel la position momentanée de l'outil de coupe (5) dans la direction d'usinage (z2) étant une fonction prédéterminée de l'angle de rotation momentané de la pièce à fabriquer (1) autour de l'axe longitudinal (Z1), dans lequel la coupe effectuée dans le processus de coupe par l'outil de coupe (5) présentant une direction de coupe qui est perpendiculaire à la direction d'usinage (z2),
g) Exécution multiple d'opérations de coupe selon l'étape f) pour produire un profilage hélicoïdal (3, 4) par découpe dans la pièce à fabriquer préfabriquée (1), dans lequel l'outil de coupe (5) étant déplacé à chaque opération de coupe à une distance radiale constante par rapport à l'axe longitudinal (Z1) de la pièce à fabriquer (1), dans lequel l'outil de coupe (5) étant déplacé en continu dans une opération de coupe dans la direction d'usinage (z2) parallèle à l'axe longitudinal (Z1) de la pièce à fabriquer (1).

2. Procédé selon la revendication 1, **caractérisé en ce que** la position instantanée de l'outil de coupe (5) le long de l'axe longitudinal (Z1) est commandée proportionnellement à l'angle de rotation.

3. Procédé selon la revendication 1 ou 2, **caractérisé en ce que** les étapes suivantes sont effectuées avant la mise à disposition de l'outil de coupe (étape de procédé e) ) ou avant la mise à disposition de l'outil de fraise (étape de procédé b) ) sont effectuées :
h) Mise à disposition un burin rotatif,
i) Contrôle du mouvement de l'outil de tournage par rapport à la pièce à fabriquer (1),
j) Exécution de l'opération de coupe rotative par le burin rotatif et préfabrication de sections cylindriques par torsion de la pièce à fabriquer (1).

4. Procédé selon l'une des revendications précédentes, **caractérisé en ce qu'**à la fin d'une opération de coupe, l'outil de coupe (5) est déplacé en arrière dans une opération de positionnement à l'encontre de la direction d'usinage (z2) le long de l'axe longitudinal (Z1) de la pièce à fabriquer (1) en passant devant les profilages hélicoïdaux (3, 4).

5. Procédé selon la revendication 4, **caractérisé en ce que** l'outil de coupe (5) est mis en prise avec le profilage hélicodal (3, 4) dans le processus de positionnement à une position initiale prédéterminée en ce qui concerne l'angle de rotation de la pièce à fabriquer autour de l'axe longitudinal (Z1), en ce qui concerne la distance radiale par rapport à l'axe longitudinal (Z1) et en ce qui concerne la position dans la direction d'usinage (z2), afin d'effectuer un processus de coupe suivant.

6. Procédé selon la revendication 5, **caractérisé en ce que** l'opération de coupe et l'opération de positionnement sont répétées, dans lequel la position initiale de l'outil de coupe (5) variant d'une répétition à l'autre au moins en ce qui concerne la distance radiale par rapport à l'axe longitudinal (Z1) et en ce qui concerne la position dans la direction d'usinage (z2), de manière à produire un contour prédéterminé des flancs du profilé hélico dal (3, 4).

7. Procédé selon l'une quelconque des revendications 4 à 6, **caractérisé en ce que** l'opération de coupe et l'opération de positionnement sont répétées jusqu'à ce que le profilage hélicoïdal (3, 4) ait atteint une forme qui diffère de la forme finale de la pièce à fabriquer (1) par une surépaisseur, dans lequel la pièce à fabriquer (1) étant durcie dans la forme présentant une surépaisseur, puis la surépaisseur étant découpée au cours d'autres opérations répétées de coupe et de positionnement jusqu'à ce que le profilage hélicoïdal (3, 4) ait atteint la forme finale de la pièce à fabriquer (1).

8. Procédé selon l'une quelconque des revendications 1 à 7, **caractérisé en ce que** l'outil de coupe (5) plonge dans un profilage préfabriqué (3, 4) lors de l'opération de coupe.

9. Procédé selon l'une quelconque des revendications 1 à 8, **caractérisé en ce que** la pièce à fabriquer (1) est formée avec au moins une partie ayant un profilage hélicoïdal (3, 4) et avec des parties d'arbre sensiblement cylindriques.

10. Procédé selon la revendication 9, **caractérisé en ce que** la pièce à fabriquer (1) est formée d'au moins deux portions à profil hélicoïdal (3, 4), les profils hélicoïdaux étant opposés.

11. Procédé selon la revendication 9 ou 10, **caractérisé en ce que** les portions à profilage hélicoïdal (3, 4) et les portions d'arbre sont formées d'une seule pièce entre elles.

12. Machine d'usinage par enlèvement de copeaux pour la fabrication d'un rotor pour une pompe à vis, avec une commande numérique assistée par ordinateur, **caractérisée en ce que** la machine d'usinage est aménagée par programmation de la commande numérique assistée par ordinateur avec des données de commande pour l'exécution du procédé selon l'une des revendications 1 à 11, de telle sorte que les données de commande déterminent le mouvement de rotation de la pièce à fabriquer (1) autour de l'axe longitudinal (Z1) en fonction des angles de rotation, ainsi que le mouvement de l'outil de coupe (5) dans la direction d'usinage (z2) parallèlement à l'axe longitudinal (Z1) de la pièce à fabriquer (1), de telle sorte que les données de commande pour une séquence d'opérations de coupe comprennent des associations entre des positions momentanées de l'outil de coupe (5) dans la direction d'usinage (z2) et des angles de rotation de la pièce à fabriquer (1) autour de l'axe longitudinal (Z1), dans lequel l'outil de coupe (5) étant déplacé à une distance radiale constante par rapport à l'axe longitudinal (Z1) de la pièce à fabriquer (1) lors de chaque opération de coupe, dans lequel l'outil de coupe (5) est continuellement déplacé dans la direction d'usinage (z2) parallèlement à l'axe longitudinal (Z1) de la pièce à fabriquer (1) lors d'une opération de coupe.

13. Machine d'usinage selon la revendication 12, **caractérisée en ce que** les données de commande comprennent en outre des données de position initiale qui définissent, pour la séquence d'opérations de coupe, respectivement l'angle de rotation initial de la pièce à fabriquer autour de l'axe longitudinal (Z1), la distance radiale de l'outil de coupe (5) par rapport à l'axe longitudinal (Z1) et la position initiale de l'outil de coupe (5) dans la direction d'usinage (z2).
